# DEMANDE DE BREVET EUROPEEN

(11) **EP 1 288 806 A1**
(43) Date de publication de la demande: **05.03.2003**
(21) Numéro de dépôt: 01402286.7
(22) Date de dépôt: 03.09.2001
(51) Int. Cl.: G06F 17/60

(54) **Système et méthode de couverture de transactions en ligne par une assurance crédit**

(71) Demandeur: Tinubu Square, 92120 Montrouge (FR)
(72) Inventeur: Peze, Jérôme, 75007 Paris (FR)
(74) Mandataire: David, Daniel

(57) **Abrégé**

L'invention vise un système pour la couverture par une assurance crédit du risque de contrepartie d'au moins une transaction en ligne entre un acheteur (An) et un vendeur (Vn), ceux-ci étant des entreprises, sur une plate forme de commerce électronique (CE), système comprenant un site fournisseur (S) de services en ligne communiquant d'une part avec la dite plate forme (CE), et d'autre part avec le serveur d'au moins un assureur crédit (AC), et le serveur d'au moins un fournisseur (FI) de renseignements sur les entreprises, et comportant
a. un moyen de stockage de données pour stocker une valeur limite de crédit dite de délégation accordée par ledit assureur crédit (AC) en faveur du vendeur (Vn),
b. un moyen de traitement (Td) de données pour calculer une note de risque relative au dit acheteur (An) à partir de données fournies sur ce dernier notamment par le fournisseur d'information (FI), et pour déterminer en fonction de la dite note de risque et de la limite de crédit un en-cours maximum autorisé pour l'acheteur.

## Description

La présente invention se rapporte aux transactions entre entreprises sur une plate forme de commerce électronique et vise la couverture du risque de contrepartie de telles transactions par une assurance crédit.

Une plate forme de commerce électronique est un site auquel on peut se connecter au travers d'un réseau informatique tel qu'Internet pour réaliser des transactions commerciales. Il peut s'agir d'une place de marché mettant en rapport acheteurs et vendeurs pour leur permettre d'effectuer des transactions sur un type de produits ou de services déterminés, par exemple achat de matériel de bureau. Il peut s'agir aussi d'un site fournisseur, une entreprise mettant son catalogue en ligne.

Afin de faciliter les transactions et même de les rendre possibles, il est important pour une plate forme de commerce électronique de pouvoir offrir aux vendeurs adhérents des moyens pour garantir le paiement par l'acheteur. Cette garantie permet en retour au vendeur de faire bénéficier l'acheteur d'un crédit fournisseur plus favorable.

C'est le rôle de l'assurance crédit par lequel une compagnie d'assurance, pour une transaction donnée, garantit l'assuré, c'est à dire le vendeur, contre toute défaillance de l'acheteur dans une limite liée à la situation financière de l'acheteur.

Dans le contexte du commerce électronique « BtoB », il est souhaitable de pouvoir prendre une décision sur le risque lié à la transaction sans créer de rupture dans la procédure de prise de commande, et en un temps très court, sinon l'intérêt de passer par ce moyen s'en trouve considérablement diminué. On estime que la durée de ce processus de décision devrait être de l'ordre de la dizaine de secondes. Il est souhaitable aussi de pouvoir couvrir un territoire beaucoup plus large que ne le font les compagnies d'assurance dans le commerce traditionnel.

La présente invention a donc pour objet un système informatique qui permet la mise en place d'une assurance crédit répondant à ces objectifs.

Le système conforme à l'invention pour la couverture par une assurance crédit du risque de contrepartie d'au moins une transaction en ligne entre un acheteur et un vendeur, celles-ci étant des entreprises sur une plate forme de commerce électronique, est caractérisé par le fait qu'il comprend un site fournisseur de services en ligne relié d'une part au serveur de la dite plate forme, et d'autre part au serveur d'au moins un assureur crédit et au moins au serveur d'un fournisseur de renseignements d'entreprises, et comportant
- un moyen de stockage de données pour stocker une valeur limite de crédit accordé par ledit assureur crédit en faveur du vendeur,
- un moyen de traitement informatique de données pour calculer une note de risque relative au dit acheteur à partir de données fournies sur ce dernier notamment par le fournisseur d'information, et pour déterminer en fonction de la dite note de risque et de la limite de crédit un en-cours maximum autorisé pour l'acheteur.

Conformément à d'autres caractéristiques le site du fournisseur de services comprend au moins l'un des moyens de stockage suivants:
- un moyen de stockage de données d'identification des vendeurs de la place de marché,
- un moyen de stockage de données d'identification des acheteurs de la plate forme de commerce,
- un moyen de stockage des notes de risque calculées
- un moyen de stockage des en-cours des acheteurs agréés, des transactions effectuées et des en-cours disponibles.

L'invention porte également sur le procédé pour la mise en place d'une couverture par assurance crédit lors d'une transaction sur la plate forme de commerce électronique ci-dessus.

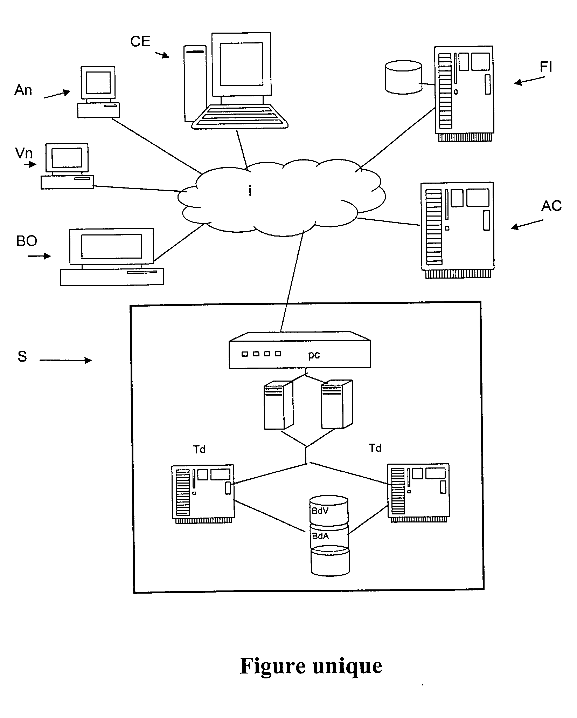

On décrit ci-après un mode de réalisation non exhaustif de l'invention en regard des dessins annexés sur lesquels la figure représente schématiquement le système conforme à l'invention.

Le site du fournisseur de services S communique avec une plate-forme de commerce électronique CE par tout moyen qui permet d'échanger des données informatiques, par exemple le réseau Internet I. Pour la suite de la description on ne mentionne qu'une plate forme de commerce électronique mais on comprend que le site S peut être relié à autant de plate forme que souhaité. Celle-ci, CE, qui peut être une place de marché ou bien un site fournisseur est elle-même accessible sur le réseau Internet, par le moyen d'ordinateurs convenablement équipés, par des acheteurs Ai qui souhaitent passer des transactions avec des vendeurs Vi. Ces derniers sont adhérents à CE et proposent leurs produits ou leurs services par le moyen de cette plate-forme. Ils sont eux même accessibles en ligne depuis la plate-forme. Si la plate forme est un site fournisseur, il peut n'y avoir qu'un vendeur.

L'architecture du site S poursuit trois objectifs principaux :Interopérabilité, disponibilité et sécurité. Ainsi l'application est notamment développée en Java et est de ce fait portable sur toute autre plate forme constructeur. Par ailleurs le système a été développé pour pouvoir communiquer avec tout type de protocole (NT, Unix, etc.).
Il présente une haute disponibilité. Celle-ci résulte de la redondance des machines qu'il est possible mettre en service et de la sécurisation du réseau. Ainsi tout problème rencontré sur une machine provoque automatiquement le basculement sur une machine de substitution. Enfin la sécurité est assurée par des murs pare-feu protégeant notamment les serveurs d'application et de données.

Le site S comporte trois niveaux. Le premier niveau est constitué par une plate forme de communication PC qui permet de communiquer sur le réseau Internet et le cas échéant au travers de lignes sécurisées avec les différents intervenants du système. Les ordinateurs An des acheteurs, Vn des vendeurs, CE des plate forme de commerce électronique, le serveur CA d'au moins une compagnie d'assurance d'une part et le serveur FI d'au moins un fournisseur de renseignements sur les entreprises d'autre part. Pour ce dernier il peut s'agir d'une société comme Dun & Bradstreet, SCRL, BILL, ORT ou Krediet Reform.

Chaque serveur constituant cette plate forme est spécialisé pour à un type d'accès ou un type d'application donnés.
Le système comprend également un ordinateur BO en arrière plan avec lequel on assure les services tels que le suivi et la gestion des contrats l'édition de rapports, etc.

Le second niveau comprend les serveurs d'application. Ces serveurs d'application sont doublés de préférence pour assurer la continuité du service, en cas de défaillance d'une machine.

Le troisième niveau comprend les serveurs de traitement des données Td sur lesquels les bases de données (Oracle) sont installées.

Ainsi à ce niveau on trouve une pluralité de moyens de stockage de données.

Il comprend une base BdA sur les acheteurs qui se sont connectés et enregistrés à une plate forme de commerce électronique faisant partie du système. Cette base comporte notamment les informations permettant d'identifier l'acheteur et en particulier un numéro d'identification national unique (Siren, code TVA intracommunautaire, etc.). Elle comporte également des informations relatives à l'historique de ses transactions ainsi qu'à sa note de risque, son en-cours maximum autorisé et à l'utilisation de ce dernier.

Il comprend une base de données vendeurs BdV comportant les informations permettant d'identifier le vendeur et en particulier son numéro d'identification national unique. Elle comprend également des informations relatives aux termes et conditions de la police d'assurance qu'il a contractée.

Le moyen de traitement des données Td permet de calculer les notes de risque des acheteurs à partir de données qui sont obtenues en ligne sur ceux-ci auprès d'au moins un fournisseur de renseignements. Par exemple on utilise des données relatives à la date de création de l'entreprise, sa forme juridique, son secteur d'activité, ses effectifs, les éléments du bilan, capital, fonds propres, dettes financières, etc. On utilise aussi éventuellement des paramètres environnementaux, la nature de la transaction et l'historique des paiements. Le nombre de paramètres n'est pas limité. En outre le mode de calcul prend aussi en considération l'origine de la source d'information, son pays et le secteur économique en particulier, et tient compte notamment des différences de définition éventuelles des notions comptables afin de créer une note de risque harmonisée.

On décrit ci-après la procédure d'enregistrement d'un nouvel acheteur auprès de la plate forme de commerce.

Le nouvel entrant An, qui s'est connecté au préalable au serveur de la place de marché, a confirmé sur son écran son intention de s'inscrire sur la plate forme CE.
- Par cette opération il vient se connecter au serveur du fournisseur de service S.
- S lui présente un formulaire de saisie de ses coordonnées (numéro de registre du commerce ou autre donnée selon la nationalité de l'entreprise, etc..).
- An valide la saisie.
- S sélectionne un site fournisseur d'informations FI en fonction notamment de la nationalité de An.
- S ouvre une session avec FI et recueille les informations d'identification des entreprises dont les données correspondent à celles reçues de An.
- S présente à An un tableau des différentes entreprises ayant les mêmes données.
- An sélectionne la référence qui lui correspond exactement et confirme.
- S stocke dans une base BdA les données identifiant An et lui attribue un numéro d'identification.

Lorsque An procède ultérieurement à sa première commande sur le site, S procède au calcul d'une note de risque caractérisant la capacité de An à se voir accorder un crédit. Pour se faire, S ouvre une session avec un fournisseur FI de renseignements d'entreprises, sélectionné notamment en fonction de la zone géographique de An. Sur la base des données et de différents autres paramètres, la note de risque est calculée et enregistrée dans la base BdA. En fonction de cette note, S détermine ensuite un en-cours maximum autorisé EMA pour An. Cette valeur servira de base à la décision d'accorder ou non un en-cours à l'acheteur, cet en-cours étant couvert par une assurance crédit.

### Procédure de décision d'accorder un en-cours à An

An est maintenant connu de la plate-forme CE et de S, il procède à un achat sur la plate forme. Cet achat peut être réalisé auprès d'un vendeur Vn choisi directement par An ou bien par le biais d'un appel d'offre. Dans ce dernier cas la plate-forme procède à une présélection parmi les vendeurs qui répondent à l'appel d'offre et l'acheteur détermine celui auprès de qui il passe la commande.
- An saisit sa commande à l'écran, les données sont enregistrées sur CE.
- Les données sont transmises à S.
- Les données d'identification de AN sont comparées à celles dans la base BdA
- Une première décision est prise sur la validation de la commande. Elle peut déjà être refusée à ce stade
- Les données relatives au vendeur sont vérifiées. Notamment pour savoir si celui-ci est assuré à cette hauteur de commande.
- Le montant de la commande est comparé avec la valeur de l'en-cours en tenant compte le cas échéant du montant que l'assureur a délégué à S
- Si le montant est inférieur à ces limites :
   ο Un message est transmis sur l'écran de An lui confirmant sa commande ainsi que les conditions de paiement.
   ο Un message est transmis au vendeur lui confirmant la couverture contractuelle du risque lié à cette transaction et que le paiement est garanti.
- Si le montant est supérieur à ces limites et dépasse l'en-cours disponible.
   ο Un message notifiant le refus est transmis sur l'écran de An. Eventuellement, la requête, ayant fait l'objet du refus, est stockée dans un fichier de mise en attente pour un traitement ultérieur. Une demande d'agrément, soit en ligne soit manuelle, est alors transmise à l'assureur. Cependant il ne s'agit plus alors d'un traitement en ligne.
- Le nouvel en-cours disponible est mis à jour. Il s'agit de l'en-cours précédent diminué du montant de la présente commande. Ce nouvel en-cours sera augmenté en fonction des paiements futurs qui seront enregistrés dans la base.

Il est à noter que l'en-cours maximal autorisé n'est disponible que sur une période déterminée, de six mois à un an. S'il apparaît que la date de son précédent calcul est ancienne, une mise à jour est nécessaire. Dans ce cas S procède à une nouvelle acquisition de données financières sur l'acheteur An et à une évaluation de la note de risque à partir de ces données.
Ainsi la solution de l'invention permet-elle de gérer la couverture par une assurance crédit des transactions en l'espace de quelques secondes.

## Revendications

1. Système pour la couverture par une assurance crédit du risque de contrepartie d'au moins une transaction en ligne entre un acheteur (An) et un vendeur (Vn), celles-ci étant des entreprises, sur une plate forme de commerce électronique (CE), **caractérisé par le fait qu'**il comprend un site fournisseur (S) de services en ligne communiquant d'une part avec la dite plate forme (CE), et d'autre part avec le serveur d'au moins un assureur crédit (AC), et le serveur d'au moins un fournisseur (FI) de renseignements sur les entreprises, et comportant
a. un moyen de stockage de données pour stocker une valeur limite de crédit dite de délégation accordée par ledit assureur crédit (AC) en faveur du vendeur (Vn),
b. un moyen de traitement (Td) de données pour calculer une note de risque relative au dit acheteur (An) à partir de données fournies sur ce dernier notamment par le fournisseur d'information (FI), et pour déterminer en fonction de la dite note de risque et de la limite de crédit un en-cours maximum autorisé pour l'acheteur.

2. Système selon la revendication précédente **caractérisé par le fait que** le fournisseur de services comprend un moyen (BdA) de stockage de données d'identification des acheteurs de la plate forme de commerce (CE).

3. Système selon l'une des revendications précédentes, **caractérisé par le fait que** le fournisseur de services (S) comprend un moyen (BdV) de stockage de données d'identification des vendeurs de la plate forme de commerce (CE).

4. Système selon l'une des revendications précédentes, **caractérisé par le fait que** le fournisseur de services comporte un moyen de stockage des valeurs des notes de risque calculées.

5. Système selon l'une des revendications précédentes, **caractérisé par le fait que** le fournisseur de services (S) comporte un moyen de stockage des en-cours des acheteurs par transaction effectuée.

6. Procédé pour couvrir par une assurance crédit le risque de contrepartie d'une transaction demandée par un acheteur sur une plate forme de commerce électronique selon l'une des revendications précédentes,
**caractérisé par le fait qu'**il comprend une étape de vérification de l'identification dudit acheteur et une étape de comparaison entre le montant de la transaction et le montant de l'en-cours maximum autorisé

7. Procédé selon la revendication précédente, **caractérisé par le fait que** la plate forme de commerce renvoie automatiquement au fournisseur de services en lignes toute requête d'un acheteur.

8. Procédé selon la revendication précédente, **caractérisé par le fait que** l'acheteur n'étant pas enregistré dans la base de donnée acheteur, il comprend une étape de création d'un numéro d'identification unique à partir des informations fournies par l'acheteur et d'informations fournies par le fournisseur de renseignements d'entreprises.

9. Procédé selon la revendication précédente, **caractérisé par le fait qu'**il comprend une étape de détermination de l'en-cours maximum autorisé par l'acheteur

10. Procédé selon la revendication précédente, **caractérisé par le fait que** ladite étape comprend le calcul d'une note de risque à partir de données fournies en ligne par le fournisseur de renseignements.

11. Procédé selon la revendication précédente, **caractérisé par le fait que** le fournisseur est choisi parmi une pluralité de fournisseurs accessibles en ligne en fonction de la nationalité de l'acheteur.

12. Procédé selon l'une des revendications 6 à 11, **caractérisé par le fait que** la poursuite de la transaction par l'acheteur est conditionnée par le résultat des vérifications faits par le fournisseur de services en ligne.
